Europäisches Patentamt

European Patent Office    Publication number: **0 309 076**

Office européen des brevets    **A2**

# EUROPEAN PATENT APPLICATION

Application number: **88306322.4**    Int. Cl.⁴ **H02K 23/36**

Date of filing: **11.07.88**

Priority: **21.09.87 GB 8722146**

Date of publication of application:
**29.03.89 Bulletin 89/13**

Designated Contracting States:
**DE FR GB IT**

Applicant: **Johnson Electric Industrial
Manufactory Limited
Johnson Building 14-16 Lee Chung Street
Chaiwan(HK)**

Inventor: **Wang, Patrick Shui-Chung
22 Belleview Drive, 10/F. Repulse Bay Garden
Repulse Bay Hong Kong(HK)**

Representative: **Higgins, Michael Roger et al
MARKS & CLERK 57/60 Lincoln's Inn Fields
London WC2A 3LS(GB)**

**Commutation in electric motors.**

An electric motor comprises a motor frame (10),
a single stator (22) of the permanent magnet type
supported by the frame, a wound armature (15)
provided with two commutators (16 and 17), and two
sets of brush gear (19, 20) supported by the frame
and co-operating with respective commutators. The
armature has two separate windings (26, 27) which
are mounted on a common lamination stack 28. The
windings are connected to the two commutators,
respectively, and connected electrically one to the
other and supplement each other in establishing
magnetic flux. Preferably, the two commutators are
at opposite ends of the armature.

## Commutation in electric motors

This invention relates to an electric motor and more particularly to a fractional horsepower permanent magnet direct current electric motor (p.m.d.c. motor).

As the energy content of magnets increases so does the opportunity to increase the power to volume ratios of small p.m.d.c. motors. By reducing the overall resistance of a motor winding the total input power to the motor can be increased by increasing the current.

This leads to problems of commutation. It is usual for the brush sections to have been optimised to carry the motor current at saturation levels. If the current to a motor is to be further increased then the brush sections must increase or serious defects will arise in the commutation.

To increase the cross section of a brush it is theoretically possible to increase either its arcuate length or its axial length or both. However, there is a problem associated with its arcuate length - the brush will short out commutator bars by reaching around the commutator too far. If the diameter of the commutator is increased to separate this shorting then the geometry concerned with the mounting of the brush becomes seriously changed. Increasing the axial length of the brush means also increasing the axial length of the commutator. Whilst this is feasible problems will be encountered in maintaining good roundness on the longer commutator.

In seeking to overcome these problems the present invention provides an electric motor comprising a motor frame, a single stator of the permanent magnet type supported by the frame, a wound armature having two separate windings mounted on a common lamination stack and arranged to supplement each other in establishing magnetic flux, two commutators connected respectively to the two windings and connected electrically one to the other, and two sets of brush gear supported by the frame and co-operating with respective commutators.

It has already been suggested to produce a miniature D.C. motor or motor-generator having two separate rotor windings but with two separate permanent magnet stators. Likewise it has already been suggested to produce a motor having two rotor windings with a single stator, but in the prior art proposals the rotor windings have not been arranged to supplement each other in establishing magnetic flux.

It is important in the present invention, however, that there be present only a single stator of the permanent magnet type and that the two separate windings be arranged to supplement each other in establishing magnetic flux, since it is in these circumstances that the benefits of the present invention manifest themselves.

The two commutators in the motor of the present invention could be provided at one end of the armature but it is envisaged that this will involve practical difficulties in connecting the outer commutator to the armature winding and consequently it is advantageous to provide the two commutators at opposite ends of the armature.

Preferably, the two sets of brush gear are connected electrically in series or parallel according to a required motor performance.

Conveniently, the motor frame comprises a sleeve which supports the single stator and two end closures each supporting one set of motor brush gear and a bearing.

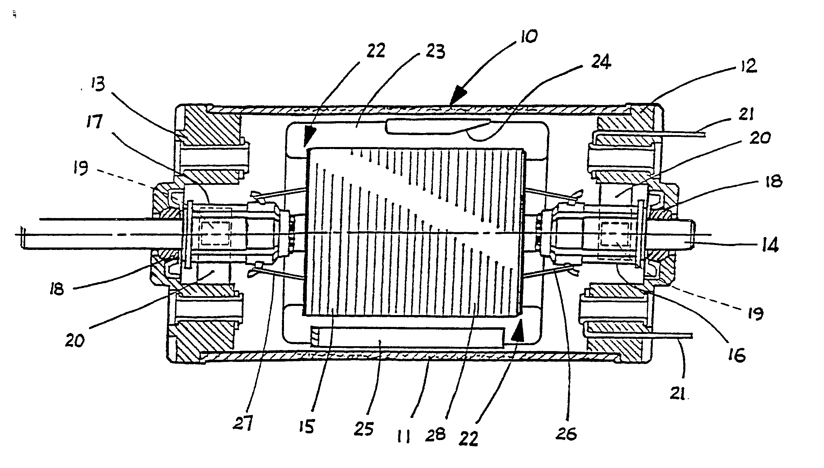

The invention will now be more particularly described, by way of example, with reference to the accompanying drawing which is a side cross-sectional view of a permanent magnet direct current small electric motor embodying the invention.

Referring to the drawing, the motor shown therein comprises a motor frame 10 consisting of a mild steel sleeve or tube 11 and two end closures 12 and 13, typically of plastics material. e.g. nylon. or anodised aluminium, and a motor shaft 14 which carries a wound armature 15 and two commutators 16 and 17 one at either end of the armature 15.

The commutators 16 and 17 and armature 15 are mounted fast on the shaft 14. The armature has two separate windings 26, 27 which are mounted on a common lamination stack 28. The two windings are connected to the two commutators, respectively, each in a manner generally known in the art, and supplement each other in establishing magnetic flux.

Each end closure 12, 13 carries a bearing 18, which may conveniently be a self aligning bearing, and the shaft 14 is journalled in the bearings 18. One or both end closures 12 and 13 may also have ventilation holes (not shown) therein for ventilation of the inside of the motor.

The end closures 12 and 13 each support a set of brush gear comprising a pair of carbon brushes 19, which are urged against a respective commutator by brush leaves 20. The brush leaves 20 of one set of brush gear (the brush gear at the right hand end of the motor shown in the drawing) are connected to power supply tags 21 and the two sets of brush gear are connected electrically in series or parallel with one another by external connectors (not shown) according to a required motor performance.

The sleeve 11 carries a single stator of the permanent magnet type, in the form of two permanent magnets 22 which bear at one axial edge 23 against a respective tang 24 and are urged apart at their other axial edges by a 'U' shaped spring 25. Alternatively, the sleeve 11 could carry a single stator in the form of a single annular permanent magnet appropriately magnetised.

Advantageously, the magnets 22 may be high energy rare earth magnets such as neodymium-iron-boron alloy magnets.

The end closures 12 and 13 are fixed to the sleeve 11 in a pre-determined angular position in order to fix the orientation of the brush gear relative to the magnets 22. This can be achieved by providing a notch in each end of the sleeve 11 which receives a projection on a respective end closure and by deforming or peening over a portion or portions of the sleeve at each end thereof to prevent separation of the end closures 13 and 14 from the sleeve 11.

By providing two commutators in a motor having a single stator of the permanent magnet type and having two separate windings arranged to supplement each other in establishing magnetic flux it is possible to supply more current to the motor without having to increase the cross-section of the brushes with the concomitant difficulties discussed previously. Also by having two commutators and two sets of brush gear the motor performance can be changed according to whether the two sets of brush gear are connected electrically in series or parallel with one another.

The above embodiment is given by of example only and various modifications will be apparent to persons skilled in the art without departing from the scope of the invention which is defined by the appended claims.

## Claims

1. An electric motor comprising a motor frame (10), a single stator (22) of the permanent magnet type supported by the frame, a wound armature having two separate windings (26, 27) mounted on a common lamination stack (28) and arranged to supplement each other in establishing magnetic flux, two commutators (16, 17) connected respectively to the two windings (26, 27) and connected electrically one to the other, and two sets of brush gear supported by the frame and co-operating with respective commutators.

2. An electric motor as claimed in claim 1, wherein the two commutators (16, 17) are at opposite ends of the armature.

3. An electric motor as claimed in claim 2, wherein the motor frame comprises a sleeve (11) which supports the single stator (22) and two end closures (12, 13) each supporting one set of motor brush gear (19. 20) and a bearing (18).

4. An electric motor as claimed in any one of the preceding claims, wherein the two sets of brush gear (19, 20) are connected electrically in series with one another.

5. An electric motor as claimed in any one of claims 1 to 3, wherein the two sets of brush gear (19, 20) are connected electrically in parallel with one another.

6. An electric motor as claimed in any one of the preceding claims. wherein the motor is a fractional horsepower motor.